# EUROPEAN PATENT SPECIFICATION

(11) **EP 3 757 173 B1**
(45) Date of publication and mention of the grant of the patent: **05.01.2022**
(21) Application number: 19212056.6
(22) Date of filing: 28.11.2019
(51) Int. Cl.: C09D 5/00

(54) **PRIMER COATING FOR FIBER FILLED PLASTIC SUBSTRATE**
PRIMER-BESCHICHTUNGSFILM FÜR FASERVERSTÄRKTES KUNSTSTOFFSUBSTRAT
FILM DE COUCHE D`IMPRESSION DESTINÉ À UN SUBSTRAT EN PLASTIQUE REMPLI DE FIBRES

(30) Priority: 28.06.2019 US 201916456600
(43) Date of publication of application: 30.12.2020
(73) Proprietor: Magna Exteriors Inc., Concord, Ontario L4K 4J5 (CA)
(72) Inventor: Barber, Benjamin J., ROCHESTER, MI 48306 (US); Singh, Ganesh, TROY, MI 48085 (US); Baltazar y Jimenez, Alexis, CONCORD, Ontario L4K 4J5 (CA)
(74) Representative: Glawe, Delfs, Moll

(56) References cited:
- EP-A1- 3 428 199
- WO-A1-2019/021259
- US-B1- 9 884 976

## Description

### FIELD OF THE INVENTION

The present invention relates to a primer coating for fiber filled plastic substrates used in an exterior show surface of a vehicle.

### BACKGROUND OF THE INVENTION

Painting of polymer Class "A" surfaces in automobile manufacturing is a complex endeavor even under the best of circumstances. Typically it has not been possible to use glass fiber filled structural polymers to provide exterior Class "A" finished surface parts. In many cases an outer shell of metal or polymer is designed to cover a structural substrate part in order to achieve a final Class "A" surface. Removing this necessity and providing a way to provide a Class "A" surface on a structural glass fiber filled polymer part would reduce weight and cost. Therefore it is a goal to achieve a Class "A" automotive paint finish on a fiber filled substrate part.

Fiber filled thermoformed compositions are increasingly more common in manufacture of vehicle body panels, lift gates, hoods, and other vehicle parts. In many cases these parts are lighter than their steel counter parts and therefore offer a weight advantage. Often fiber filled substrates are manufactured as structural back panels or sub frames and it is necessary to provide an outer paintable Class "A" show surface over the underlying fiber filled structural substrate. This is because there has not been a useable and/or cost effective way to provide a Class "A" finish on these parts.

Thus, typically fiber filled substrates are the structural part of a vehicle body panel or the like with an outer show surface skin. Therefore, extra time and other processes are required for manufacture and bonding of the two pieces together. Typically, surfaces of the fiber filled materials have not been found suitable for painting and forming a Class "A" exterior surface of a vehicle.

Therefore, manufacturing labor and other costs can be saved if it were possible to provide a paint and process for allowing painting and forming a Class "A" surface on a finished part where the part includes an exterior show surface of a vehicle. In the past when attempts at painting fiber filled parts using conventional coating (primer materials) cannot achieve a SW (short wave) that meets automotive specifications. SW is a quantitative measurement of an automotive vehicle surface determined using a wave scan device. The wave scan device determines the spectrum of reflected light from the painted surface and shows the amount of long wave and short wave light being reflected. The more shortwave or SW as used herein, the less desirable the part looks. During measurement light of different wavelengths (e.g., 16µm to 50µm is directed to the part surface. The reflected light has different wave lengths which are plotted based on intensity. Ideally the LW and SW values will be the same or close in intensity. However, with fiber reinforced resin components the SW value has been too high. The present invention seeks to address the problem of having too high of an SW value by providing a fiber filled polymer composition and flexible primer that reduces the SW value when the part is painted. The coatings were found to contain a SW which was poor to hazy in appearance and not suitable for a Class "A" show surface of a vehicle.

Thus a goal of the present invention is to provide a painting system for a fiber filled substrate that allows a Class "A" show surface on the final part. No available paint primers within current technology are known to solve this problem.

US 9,884,976 B1 discloses sealing primer compositions that can be used to reduce paint defects such as pops or vapor boil on painted plastic substrates, as well as related methods for sealing plastic substrates, and sealed plastic substrates. Sealing primer compositions of the invention include a functionalized polydiene polymer such as a hydroxylated or other functional-group-containing polybutadiene polymer.

EP 3 428 199 A1 discloses a specific radiation-curable coating composition for improving the surface adhesion of plastic parts and its uses as a primer coat, as a base coat or as a clear coat. The composition may be pigmented or unpigmented and may be cured by UV and/or EB. The invention also relates to cured coating resulting from this cure and to the coated plastic substrate with improved surface adhesion.

WO 2019/021259 A1 discloses a method for producing a Class "A" paintable surface on a fiber filled substrate part: the method provides a fiber filled polymer part having an outer show surface for use on a vehicle. This part is coated with a flexible primer coating substantially free of pigments for forming a primed surface capable of being painted for forming a Class "A" show surface for a vehicle.

### SUMMARY OF THE INVENTION

In accordance with the above goals and objectives, a method for producing a Class "A" painted surface on a fiber filled substrate vehicle part with the features of claim 1 and claim 9, respectively, is provided.

Further areas of applicability of the present invention will become apparent from the detailed description provided hereinafter.

### DETAILED DESCRIPTION OF THE PREFERRED EMBODIMENTS

The following description of the preferred embodiment(s) is merely exemplary in nature and is in no way intended to limit the invention, its application, or uses.

In its broad aspects the present invention uses an unpigmented flexible primer which improves the appearance of the final Class "A" surface of a show surface of a part made from a fiber filled polymer material. The primer flexibility maintains a Class "A" show surface of SW less than 50 to provide a suitable show surface even during thermal expansion and contraction of the substrate.

In accordance with the present invention there is provided a method for producing a Class "A" paintable surface on a fiber filled substrate vehicle part. The method includes:
a. Providing a fiber filled polymer part having an outer show surface for use on a vehicle.
b. Coating said molded outer surface with a flexible primer coating substantially free of pigments for forming a primed surface capable of being painted for forming a Class "A" show surface for a vehicle.

A primer for providing a primed fiber filled substrate vehicle part with a Class "A" paintable surface is also provided wherein the primer is a flexible coating on the fiber filled substrate which includes from about 70 to 100% by weight of a first cross-linkable resin selected from the group of polyurethane, polyester, melamine, and acrylic resins and mixtures thereof and from about 1 to about 30% of a second compatible cross-linkable isocyanate resin preferably a monomeric urethane isocyanate resin.

The substrates useful in the present invention typically include fiber filled polymer materials normally used as structural parts in vehicle body panel. One such material is a sheet molding composition substantially filled with between 1" and 3" glass fibers. Other materials in which the invention is useful include thermoplastic olefins substantially filled with chopped carbon and/or long glass fibers and molded into a final part which includes a Class "A" surface as a part of the final molded part molded out of the fiber filled material. Other chopped carbon fiber filled thermoset or thermoformed polymer parts will find the present invention advantageous. For instance, the primers of the present invention are also useful on carbon fiber filled materials. Such filled carbon fiber materials include 35% to 65% by weight sheet molding composition and 35% to 65% by weight .5" to 2.5" carbon fibers.

When substrates of polyamide and polyolefin thermoplastic resins with fiber reinforcements are used it can hinder achieving a class "A" finish (determined by unfavorable SW values). The reason for this is that there is a difference in the thermal conductivity and fiber alignment between fiberrich and resin-rich micro-domains that form in the substrate. This invention addresses this problem by providing an additional embodiment of the invention where the substrate is a thermoplastic matrix with fiber reinforcements. In this embodiment the thermoplastic matrix with fiber reinforcements is formed of at least two resins of the group including polyamide, polypropylene, acrylonitrile butadiene styrene and various combinations thereof, in addition to fiber reinforcements that are glass fibers or carbon fibers.

In a preferred embodiment the flexible primer comprises a clear melamine primer layer. Flexible primers made in accordance with the present invention must be capable of having the ability to build up a film to a 50 micron thickness without sagging while maintaining the SW of generally less than 50, typically less than 35 and in preferably less than 15.

In a further preferred embodiment flexible primer coating is a two component high solids leveling primer material which includes generally from about 70 to 100% by weight of a first cross-linkable resin selected from the group of polyurethane, polyester, melamine, and acrylic resins and mixtures thereof and from about 1 to about 30% by weight of a second compatible cross-linkable isocyanate resin preferably a monomeric urethane isocyanate resin. A material meeting the criteria of the present invention is an SX 1056 flexible 2K sealer and SX 1058 2K primer catalyst available from PPG Automotive Resins mixed in the above ratios.

Preferably the two component high solids leveling primer has a first component that is a high solids material containing greater than 50% solids and has a sag control agent in an amount of 8 to about 12 % by weight. Preferably the sag control agent is a polyurea having fine crystalline needles in its structure.

In order to ensure the necessary flexibility of the final component it is necessary to make sure that the components selected for the first and second components of the coating are substantially free of any pigmented fillers which would decrease or otherwise detrimentally affect flexibility.

Further information concerning the invention will be realized in view of the examples below with reference to the specification and claims herein.

### Example 1

Test panels were prepared in accordance with the chart in Table 1 using the Urethane SX 1056 primer and SX 1058 catalyst in a 4 to 1 ratio by weight. A primer coat was applied over a glass filled SMC surface. After curing for 30 minutes at 80 degrees centigrade, urethane based automotive base coats and top coats are applied over the primed surface and then cured in accordance with Table 1. As shown in the chart the SW results are greater than 15 with the first test panel being 43.2 and the second test panel being 25.

**Table 1**

| Pa ne 1 # | Prim er | Prim er | Base Coat | Clea r Coat | Cl ea r Co at | Ini tia 1 | 240 hr Hum d-ity | Rea d-ing s | Horz Appearance (Spraymation) | | | |
|---|---|---|---|---|---|---|---|---|---|---|---|---|
| | Code | Bake | Code | Code | Ba ke | Adh e-sio n | Adh e-sio n | Tak en | LW | SW | R | DO I |
| 1 | SX10 56/1 058 | 30/8 0C | urethan e | urethan e | 30 /8 0C | 100 % | 100 % | Coo led | 8. 1 | 43 .2 | 7 5 | 86 .6 |
| 2 | SX10 56/1 058 | 30/8 0C | urethan e | urethan e | 30 /8 0C | 100 % | 100 % | Coo led | 11 .5 | 25 | 6 . 6 | 92 .8 |

The values in table one of LW (Long Wave) SW (short wave) and DOI (Distinctiveness of Image) are measured using a BYK-Wave Scan instrument available from BYK Gardner USA 9104 Guilford Road, Columbia, MD 21406.

### Example 2

Flexible urethane primers are mixed in with catalyst in amounts of 70, 80, 90 and 99% by weight of a first cross-linkable resin selected from the group of polyurethane, polyester, melamine, and acrylic resins and mixtures thereof and from about 1, 10, 20, and 30% by weight of a second compatible cross-linkable isocyanate resin preferably a monomeric urethane isocyanate resin. Each of these mixtures are used with a sag control agent in weights of 8, 9, 10, 11 and 12 percent by weight in the first component. These primers are applied to various thermoplastic fiber filled substrates in coatings of up to about 50 microns and cured. Thereafter standard urethane base automotive grade base coats and top coats are applied and are allowed to cure. The panels are tested for SW and all are found to be less than 50 with some samples being less than 35 and some are less than 20% with one less than 15.

### Example 3

Flexible urethane primers are mixed in with catalyst in amounts of 70, 80, 90 and 99% by weight of a first cross-linkable resin selected from the group of polyurethane, polyester, melamine, and acrylic resins and mixtures thereof and from about 1, 10, 20, and 30% by weight of a second compatible cross-linkable isocyanate resin preferably a monomeric urethane isocyanate resin. Each of these mixtures are used with a sag control agent in weights of 8, 9, 10, 11 and 12 percent by weight in the first component. These primers are applied to a fiber filled polymer part formed of a thermoplastic matrix. The thermoplastic matrix includes fiber reinforcements dispersed in a thermoplastic resin that consists essentially of one of the following groups: polyamide, polypropylene, acrylonitrile butadiene styrene. The fiber reinforcements used are glass fibers or carbon fibers that are dispersed in the thermoplastic resin. After application of the flexible urethane primers standard urethane base automotive grade base coats and top coats are applied and are allowed to cure. The panels are tested for SW and all are found to be less than 50 with some samples being less than 35 and some are less than 20% with one less than 15.

## Claims

1. A method for producing a Class "A" paintable surface on a fiber filled substrate part comprising:
a. Providing a fiber filled polymer part having an outer show surface for use on a vehicle, wherein the fiber filled polymer part is formed of a thermoplastic matrix wherein the thermoplastic matrix includes fiber reinforcements dispersed in a thermoplastic resin that consists essentially of one of the following groups: polyamide, polypropylene, acrylonitrile butadiene styrene; and
b. Coating the molded outer surface with a flexible primer coating substantially free of pigments for forming a primed surface capable of being painted for forming a Class "A" show surface for a vehicle, wherein the short wave intensity value of the part is less than or equal to about 50, wherein short wave is a quantitative measurement of an automotive vehicle surface determined using a wave scan device.

2. The method for producing a Class "A" paintable surface on a fiber filled substrate part of claim 1, wherein the short wave intensity value of the part being less than or equal to about 35.

3. The method for producing a Class "A" paintable surface on a fiber filled substrate part of claim 1 or 2, wherein the fiber filled polymer is a sheet molding composition substantially filled with between 1" and 3" fibers.

4. The method for producing a Class "A" paintable surface on a fiber filled substrate part of any one of claims 1 to 3, wherein the flexible primer comprises a clear melamine primer layer; and/or
wherein the flexible primer coating has the ability to build a film to a 50 micron thickness without sagging; and/or
wherein the flexible primer coating is a two component high solids leveling primer.

5. The method for producing a Class "A" paintable surface on a fiber filled substrate part of any one of claims 1 to 4, wherein the flexible primer further comprises from about 70 to 100% by weight of a first cross-linkable resin selected from the group of polyurethane, polyester, melamine, and acrylic resins and mixtures thereof and from about 1 to about 30% of a second compatible cross-linkable isocyanate resin preferably a monomeric urethane isocyanate resin.

6. The method for producing a Class "A" paintable surface on a fiber filled substrate part of any one of claims 4 or 5, wherein the two component high solids leveling primer has a first component with a high solids material containing greater than 50% solids; and/or
wherein the first component includes a sag control agent in an amount of from about 8 to about 12%, the sag control agent preferably further comprising a polyurea having fine crystalline needles in its structure.

7. The method for producing a Class "A" paintable surface on a fiber filled substrate part of any one of claims 4 to 6, wherein the first and second components are substantially free of any pigmented fillers which would decrease flexibility.

8. The method for producing a Class "A" paintable surface on a fiber filled substrate part of any one of claims 1 to 7, wherein the part is coated with a base layer and clear coat layer of an automotive Class "A" surface paint system; and/or
wherein the fiber reinforcements of the thermoplastic matrix include one of glass fibers or carbon fibers.

9. A vehicle part having a Class "A" surface comprising:
a. A fiber filled polymer part molded for having an exposed surface to be used as a Class "A" surface, wherein the fiber filled polymer part is formed of a thermoplastic matrix wherein the thermoplastic matrix includes fiber reinforcements dispersed in a thermoplastic resin that consists essentially of one of the following groups: polyamide, polypropylene, acrylonitrile butadiene styrene; and
b. A flexible primer coating on the surface, wherein the flexible primer is substantially pigment free, whereby the coated surface has a short wave intensity value of less than 50, wherein short wave is a quantitative measurement of an automotive vehicle surface determined using a wave scan device.

10. The vehicle part of claim 9 wherein the flexible primer coating comprises from about 70 to 100% by weight of a first cross-linkable resin selected from the group of polyurethane, polyester, melamine, and acrylic resins and mixtures thereof and from about 1 to about 30% of a second compatible cross-linkable isocyanate resin preferably a monomeric urethane isocyanate resin.

11. The vehicle part of any one of claims 9 to 10, wherein the flexible primer is a melamine coating; and/or
wherein the first component is a high solids material containing greater than 50% solids; and/or
wherein the first component includes a sag control agent in an amount of from about 8 to about 12%.

12. The vehicle part of any one of claims 9 to 11, wherein the sag control agent further comprises a polyurea having fine crystalline needles in its structure.

13. The vehicle part of any one of claims 9 to 12, wherein the part is coated with a base layer and clear coat layer of an automotive Class "A" surface paint system.

14. The method for producing a Class "A" paintable surface on a fiber filled substrate part of any one of claims 9 to 13, wherein the short wave intensity value of the part is less than or equal to about 35.

15. The method for producing a Class "A" paintable surface on a fiber filled substrate part of any one of claims 9 to 14, wherein the fiber reinforcements of the thermoplastic matrix include one of glass fibers or carbon fibers.

## Patentansprüche

1. Verfahren zur Herstellung einer lackierbaren Oberfläche der Klasse "A" auf einem mit Fasern gefüllten Substratteil, umfassend:
a. Bereitstellen eines fasergefüllten Polymerteils mit einer äußeren Sichtfläche zur Verwendung an einem Fahrzeug, wobei das fasergefüllte Polymerteil aus einer thermoplastischen Matrix gebildet ist, wobei die thermoplastische Matrix Faserverstärkungen enthält, die in einem thermoplastischen Harz dispergiert sind, das im Wesentlichen aus einer der folgenden Gruppen besteht: Polyamid, Polypropylen, Acrylnitril-Butadien-Styrol, und
b. Beschichten der geformten Außenfläche mit einer flexiblen Grundierungsbeschichtung, die im Wesentlichen frei von Pigmenten ist, um eine grundierte Oberfläche zu bilden, die lackiert werden kann, um eine Sichtfläche der Klasse "A" für ein Fahrzeug zu bilden, wobei der Kurzwellenintensitätswert des Teils kleiner oder gleich etwa 50 ist, wobei Kurzwelle eine quantitative Messung einer Kraftfahrzeugoberfläche ist, die unter Verwendung einer Wellenabtastvorrichtung bestimmt wird.

2. Verfahren zur Herstellung einer lackierbaren Oberfläche der Klasse "A" auf einem fasergefüllten Substratteil nach Anspruch 1, wobei der Kurzwellenintensitätswert des Teils kleiner oder gleich etwa 35 ist.

3. Verfahren zur Herstellung einer lackierbaren Oberfläche der Klasse "A" auf einem fasergefüllten Substratteil nach Anspruch 1 oder 2, wobei das fasergefüllte Polymer eine Folienformmasse ist, die im Wesentlichen mit zwischen 1" und 3" Fasern gefüllt ist.

4. Verfahren zur Herstellung einer lackierbaren Oberfläche der Klasse "A" auf einem fasergefüllten Substratteil nach einem der Ansprüche 1 bis 3, wobei die flexible Grundierung eine klare Melamin-Grundierungsschicht umfasst, und/oder
wobei die flexible Grundierungsbeschichtung in der Lage ist, einen Film bis zu einer Dicke von 50 Mikrometern aufzubauen, ohne abzusacken, und/oder
wobei die flexible Grundierungsbeschichtung eine Zweikomponenten-Grundierung mit hohem Feststoffgehalt ist.

5. Verfahren zur Herstellung einer lackierbaren Oberfläche der Klasse "A" auf einem fasergefüllten Substratteil nach einem der Ansprüche 1 bis 4, wobei die flexible Grundierung ferner etwa 70 bis 100 Gew.-% eines ersten vernetzbaren -Harzes, ausgewählt aus der Gruppe der Polyurethan-, Polyester-, Melamin- und Acrylharze und deren Mischungen, und etwa 1 bis etwa 30 % eines zweiten kompatiblen vernetzbaren Isocyanatharzes, vorzugsweise eines monomeren Urethanisocyanatharzes, enthält-.

6. Verfahren zur Herstellung einer lackierbaren Oberfläche der Klasse "A" auf einem fasergefüllten Substratteil nach einem der Ansprüche 4 oder 5, wobei die Zweikomponenten-Grundierung mit hohem Feststoffgehalt eine erste Komponente mit einem Material mit hohem Feststoffgehalt von mehr als 50 % Feststoff aufweist und/oder
wobei die erste Komponente ein Senkungssteuermittel in einer Menge von etwa 8 bis etwa 12 % enthält, wobei das Senkungssteuermittel vorzugsweise ferner einen Polyharnstoff mit feinen kristallinen Nadeln in seiner Struktur umfasst.

7. Verfahren zur Herstellung einer lackierbaren Oberfläche der Klasse "A" auf einem fasergefüllten Substratteil nach einem der Ansprüche 4 bis 6, wobei die erste und die zweite Komponente im Wesentlichen frei von pigmentierten Füllstoffen sind, die die Flexibilität verringern würden.

8. Verfahren zur Herstellung einer lackierbaren Oberfläche der Klasse "A" auf einem fasergefüllten Substratteil nach einem der Ansprüche 1 bis 7, wobei das Teil mit einer Grundschicht und einer Klarlackschicht eines Oberflächenlacksystems der Klasse "A" für Kraftfahrzeuge beschichtet wird, und/oder
wobei die Faserverstärkungen der thermoplastischen Matrix entweder Glasfasern oder Kohlenstofffasern umfassen.

9. Fahrzeugteil mit einer Oberfläche der Klasse "A", das Folgendes umfasst:
a. Fasergefülltes Polymerteil, das so geformt ist, dass es eine freiliegende Oberfläche aufweist, die als Klasse "A"-Oberfläche zu verwenden ist, wobei das fasergefüllte Polymerteil aus einer thermoplastischen Matrix gebildet ist, wobei die thermoplastische Matrix Faserverstärkungen enthält, die in einem thermoplastischen Harz dispergiert sind, das im Wesentlichen aus einer der folgenden Gruppen besteht: Polyamid, Polypropylen, Acrylnitril-Butadien-Styrol, und
b. eine flexible Grundierungsbeschichtung auf der Oberfläche, wobei die flexible Grundierung im Wesentlichen pigmentfrei ist, wodurch die beschichtete Oberfläche einen Kurzwellenintensitätswert von weniger als 50 aufweist, wobei Kurzwelle eine quantitative Messung einer Kraftfahrzeugoberfläche ist, die unter Verwendung einer Wellenabtastvorrichtung bestimmt wird.

10. Fahrzeugteil nach Anspruch 9, wobei die flexible Grundierungsbeschichtung etwa 70 bis 100 Gew.-% eines ersten vernetzbaren -Harzes, ausgewählt aus der Gruppe der Polyurethan-, Polyester-, Melamin- und Acrylharze und deren Mischungen, und etwa 1 bis etwa 30 % eines zweiten kompatiblen vernetzbaren Isocyanatharzes, vorzugsweise eines monomeren Urethanisocyanatharzes, umfasst.

11. Fahrzeugteil nach einem der Ansprüche 9 bis 10, wobei die flexible Grundierung eine Melaminbeschichtung ist und/oder
wobei die erste Komponente ein Material mit hohem Feststoffgehalt ist, das mehr als 50 % Feststoffe enthält, und/oder
wobei die erste Komponente ein Senkungssteuerungsmittel in einer Menge von etwa 8 bis etwa 12 % enthält.

12. Fahrzeugteil nach einem der Ansprüche 9 bis 11, wobei das Senkungssteuermittel ferner einen Polyharnstoff mit feinen kristallinen Nadeln in seiner Struktur umfasst.

13. Fahrzeugteil nach einem der Ansprüche 9 bis 12, wobei das Teil mit einer Grundschicht und einer Klarlackschicht aus einem Oberflächenlacksystem der Klasse "A" für Kraftfahrzeuge beschichtet ist.

14. Verfahren zur Herstellung einer lackierbaren Oberfläche der Klasse "A" auf einem fasergefüllten Substratteil nach einem der Ansprüche 9 bis 13, wobei der Kurzwellenintensitätswert des Teils kleiner oder gleich etwa 35 ist.

15. Verfahren zur Herstellung einer lackierbaren Oberfläche der Klasse "A" auf einem fasergefüllten Substratteil nach einem der Ansprüche 9 bis 14, wobei die Faserverstärkungen der thermoplastischen Matrix entweder Glasfasern oder Carbonfasern umfassen.

## Revendications

1. Procédé pour produire une surface à peindre de classe « A » sur une partie substrat chargée de fibres, comprenant les étapes consistant à :
a. fournir une partie polymère chargée de fibres ayant une surface d'exposition extérieure destinée à être utilisée sur un véhicule, la partie polymère chargée de fibres étant réalisée à partir d'une matrice thermoplastique, la matrice thermoplastique incluant des renforcements de fibres dispersés dans une résine thermoplastique qui est composée essentiellement de l'un des groupes suivants : polyamide, polypropylène, acrylonitrile butadiène styrène ; et
b. revêtir la surface extérieure moulée avec un revêtement d'apprêt sensiblement exempt de pigments destiné à réaliser une surface d'apprêt capable d'être peinte pour réaliser une surface d'exposition de classe « A » pour un véhicule, la valeur d'intensité d'onde courte de la partie étant inférieure ou égale à environ 50, l'onde courte étant un mesurage quantitatif d'une surface de véhicule automobile déterminée en utilisant un dispositif de balayage d'ondes.

2. Procédé pour produire une surface à peindre de classe « A » sur une partie substrat chargée de fibres selon la revendication 1, dans lequel la valeur d'intensité d'onde courte de la partie est inférieure ou égale à environ 35.

3. Procédé pour produire une surface à peindre de classe « A » sur une partie substrat chargée de fibres selon la revendication 1 ou 2, dans lequel le polymère chargé de fibres est une composition de moulage en feuille sensiblement chargée de fibres entre 1" et 3".

4. Procédé pour produire une surface à peindre de classe « A » sur une partie substrat chargée de fibres selon l'une quelconque des revendications 1 à 3, dans lequel l'apprêt flexible comprend une couche d'apprêt en mélamine transparente ; et/ou
dans lequel le revêtement d'apprêt flexible a la faculté de former un film jusqu'à 50 microns d'épaisseur sans s'affaisser ; et/ou
dans lequel le revêtement d'apprêt flexible est un apprêt de nivellement à haute teneur en solides à deux composants.

5. Procédé pour produire une surface à peindre de classe « A » sur une partie substrat chargée de fibres selon l'une quelconque des revendications 1 à 4, dans lequel l'apprêt flexible comprend en outre d'environ 70 % à environ 100 % en poids d'une première résine réticulable sélectionnée parmi le groupe constitué de : polyuréthane, polyester, mélamine, et résines acryliques et des mélanges de ceux-ci ; et d'environ 1 à environ 30 % d'une seconde résine isocyanate réticulable compatible, de préférence d'une résine monomère uréthane isocyanate.

6. Procédé pour produire une surface à peindre de classe « A » sur une partie substrat chargée de fibres selon l'une quelconque des revendications 4 ou 5, dans lequel l'apprêt de nivellement à haute teneur en solides à deux composants a un premier composant avec un matériau à haute teneur en solides contenant plus de 50 % de solides ; et/ou dans lequel le premier composant inclut un agent de contrôle d'affaissement dans une quantité allant d'environ 8 à 12 %, l'agent de commande d'affaissement comprenant en outre de préférence une polyurée ayant de fines aiguilles cristallines dans sa structure.

7. Procédé pour produire une surface à peindre de classe « A » sur une partie substrat chargée de fibres selon l'une quelconque des revendications 4 à 6, dans lequel le premier et le second composant sont sensiblement exempts de tous éléments de charge pigmentés qui diminueraient la flexibilité.

8. Procédé pour produire une surface à peindre de classe « A » sur une partie substrat chargée de fibres selon l'une quelconque des revendications 1 à 7, dans lequel la partie est revêtue avec une couche de base et une couche de revêtement transparente d'un système de peinture de surface automobile de classe « A » ; et/ou
dans lequel les renforcements de fibres de la matrice thermoplastique incluent soit des fibres de verre, soit des fibres de carbone.

9. Partie de véhicule ayant une surface de classe « A », comprenant :
a. une partie polymère chargée de fibres moulées destinée à avoir une surface exposée pour être utilisée à titre de surface de classe « A », la partie polymère chargée de fibres étant constituée d'une matrice thermoplastique, la matrice thermoplastique incluant des renforcements de fibres dispersés dans une résine thermoplastique qui est composée essentiellement de l'un des groupes suivants : polyamide, polypropylène, acrylonitrile butadiène styrène ; et
b. un revêtement d'apprêt flexible sur la surface extérieure, l'apprêt flexible étant sensiblement exempt de pigments, grâce à quoi la surface revêtue a une valeur d'intensité d'onde courte inférieure ou égale à 50, l'onde courte étant un mesurage quantitatif d'une surface de véhicule automobile déterminé en utilisant un dispositif de balayage d'ondes.

10. Partie de véhicule selon la revendication 9, dans laquelle le revêtement d'apprêt flexible comprend d'environ 70 % à environ 100 % en poids d'une première résine réticulable sélectionnée parmi le groupe constitué de : polyuréthane, polyester, mélamine, et résines acryliques et des mélanges de ceux-ci ; et d'environ 1 à environ 30 % d'une seconde résine isocyanate réticulable compatible, de préférence d'une résine monomère uréthane isocyanate.

11. Partie de véhicule selon l'une quelconque des revendications 9 à 10, dans laquelle l'apprêt flexible est un revêtement en mélamine ; et/ou dans laquelle le premier composant a un matériau à haute teneur en solides contenant plus de 50 % de solides ; et/ou
dans laquelle le premier composant inclut un agent de contrôle d'affaissement dans une quantité allant d'environ 8 à 12 %.

12. Partie de véhicule selon l'une quelconque des revendications 9 à 11, dans laquelle l'agent de contrôle d'affaissement comprend en outre une polyurée ayant de fines aiguilles cristallines dans sa structure.

13. Partie de véhicule selon l'une quelconque des revendications 9 à 12, dans laquelle la partie est revêtue avec une couche de base et une couche de revêtement transparente d'un système de peinture de surface automobile de classe « A ».

14. Procédé pour produire une surface à peindre de classe « A » sur une partie substrat chargée de fibres selon l'une quelconque des revendications 9 à 13, dans lequel la valeur d'intensité d'onde courte de la partie est inférieure ou égale environ 35.

15. Procédé pour produire une surface à peindre de classe « A » sur une partie substrat chargée de fibres selon l'une quelconque des revendications 9 à 14, dans lequel les renforcements de fibres de la matrice thermoplastique incluent soit des fibres de verre, soit des fibres de carbone.
